(19) Europäisches Patentamt
European Patent Office
Office européen des brevets

(11) EP 3 903 229 B1

(12) **EUROPEAN PATENT SPECIFICATION**

(45) Date of publication and mention of the grant of the patent:
**30.10.2024 Bulletin 2024/44**

(21) Application number: **19845830.9**

(22) Date of filing: **20.12.2019**

(51) International Patent Classification (IPC):
***G06V 10/25*** *(2022.01)* ***G06V 10/24*** *(2022.01)*
***G06V 20/64*** *(2022.01)* *G06V 20/20 (2022.01)*

(52) Cooperative Patent Classification (CPC):
**G06V 10/255; G06V 10/42; G06V 10/443; G06V 20/64;** G06V 10/245; G06V 20/20

(86) International application number:
**PCT/IB2019/061162**

(87) International publication number:
**WO 2020/136523 (02.07.2020 Gazette 2020/27)**

(54) **SYSTEM AND METHOD FOR THE RECOGNITION OF GEOMETRIC SHAPES**
SYSTEM UND VERFAHREN ZUR ERKENNUNG GEOMETRISCHER FORMEN
SYSTÈME ET PROCÉDÉ DE RECONNAISSANCE DE FORMES GÉOMÉTRIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.12.2018 BG 11285618**

(43) Date of publication of application:
**03.11.2021 Bulletin 2021/44**

(73) Proprietor: **ECOMAGIC LTD**
**1113 Sofia (BG)**

(72) Inventor: **RANZATO, Daniele**
**20010 Marcallo con Casone (IT)**

(74) Representative: **Savi, Massimiliano et al**
**Notarbartolo & Gervasi S.p.A.**
**Viale Achille Papa, 30**
**20149 Milano (IT)**

(56) References cited:
**EP-A1- 2 662 839** **EP-A1- 3 416 092**
**WO-A1-2018/112790**

- **LI XIN ET AL: "Perspective correction using camera intrinsic parameters", 2014 12TH INTERNATIONAL CONFERENCE ON SIGNAL PROCESSING (ICSP), IEEE, 6 November 2016 (2016-11-06), pages 854 - 858, XP033076079, ISSN: 2164-5221, ISBN: 978-1-4799-2188-1, [retrieved on 20170313], DOI: 10.1109/ICSP.2016.7877951**
- **"Accurate Visual Metrology from Single and Multiple Uncalibrated Images", 1 January 2001, SPRINGER LONDON, London, ISBN: 978-0-85729-327-5, article ANTONIO CRIMINISI: "Accurate Visual Metrology from Single and Multiple Uncalibrated Images", XP055321892**
- **GUANGHUI WANG ET AL: "A novel approach for single view based plane metrology", PATTERN RECOGNITION, 2002. PROCEEDINGS. 16TH INTERNATIONAL CONFERENCE ON QUEBEC CITY, QUE., CANADA 11-15 AUG. 2002, LOS ALAMITOS, CA, USA,IEEE COMPUT. SOC, US, vol. 2, 11 August 2002 (2002-08-11), pages 556 - 559, XP010613944, ISBN: 978-0-7695-1695-0, DOI: 10.1109/ICPR.2002.1048364**
- **JUAREZ-SALAZAR RIGOBERTO ET AL: "Homography estimation for camera document scanning applications", PROCEEDINGS OF SPIE; [PROCEEDINGS OF SPIE ISSN 0277-786X VOLUME 10524], SPIE, US, vol. 10751, 7 September 2018 (2018-09-07), pages 107510H - 107510H, XP060110748, ISBN: 978-1-5106-1533-5, DOI: 10.1117/12.2322001**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 903 229 B1

## Description

### Field of the invention

The present invention and the preferred embodiments described hereafter relate in general to a system and to a method for the recognition and measurement of geometric shapes. In particular, the purpose of the invention is to recognize geometric shapes such as rectangles or parallelograms present in a photograph, or another digital acquisition of an image, and to return their dimensions and position. In more detail, the solution proposed herein can be used to measure openings, for example doors or windows, present on a facade of a building and framed with a smartphone, rapidly and efficiently and it is also able to provide an instrument for processing the images acquired through the addition of digital graphic elements consistent with the processed image in terms of dimensions and perspective.

### State of the art

In the prior art, some solutions are known which allow recognizing and measuring objects by framing them for example with a smartphone.

Also known are other solutions that allow identifying characteristic points, or reference points for the recognition of objects and shapes.

Document CN107369150A provides a method and a device for detecting a rectangular object. The adaptation is carried out to obtain a polygon based on the contour of a binary image and the included adjacent corner of the rectangular object and the characteristics of the lengths of the sides of the included corner are utilized to carry out the detection of the target rectangle. The target rectangle is detected on the basis of the included adjacent corner and of the lengths of the sides of the included corner, even if the part of the sides or the part of the vertex of the destination rectangle is shielded, adhered or damaged, only two included adjacent corners and the lengths of the sides of the included corners can be detected, the method and the device for the detection of the rectangular object can determine the target rectangle and, therefore, the method and the device for the detection of the rectangular object can in fact detect the rectangular object to improve the robustness of the detection of the target.

Document US5808623A describes a multi-pass algorithm for applying a perspective transform to quadrilateral images by means of at least two phases of 1-dimensional resampling processes for each dimension. Each step constitutes a perspective transform from a rectangle to a trapezoid with parallel sides parallel to the corresponding sides of the rectangle. More particularly, each phase comprises a foreshortening pass in one dimension (vertical for parallel horizontal sides, horizontal for parallel vertical sides) followed by a trapezoidal pseudo-shear pass in the other dimension. Thus, in the first phase, the source rectangle is transformed into a first, intermediate trapezoid with either parallel horizontal or parallel vertical sides. In the second phase, the bounding box of this intermediate trapezoid (i.e., the smallest axis-aligned rectangle containing the trapezoid) is transformed to a second, target trapezoid with either parallel vertical or parallel horizontal sides (i.e., the opposite of the intermediate trapezoid) that bounds the final quadrilateral.

Thus, by so transforming the bounding box of the intermediate trapezoid, the corners of the intermediate trapezoid are mapped to the corners of the target quadrilateral. The invention has two advantages over the prior art processes: although some complex calculations have to be performed for each row or column, the per pixel calculations are much simpler; and since the shape of the result is a simple trapezoid (remembering that a rectangle is a trapezoid) at each step, it is easy to control the resampling process to ensure that these shapes are achieved and the result appears stable.

Document US20130335575A1 describes how a reference in an unknown environment is generated on the fly for positioning and tracking. The reference is produced in a top down process by capturing an image of a planar object with a predefined geometric shape, detecting edge pixels of the planar object, then detecting a plurality of line segments from the edge pixels. The plurality of line segments may then be used to detect the planar object in the image based on the predefined geometric shape. An initial pose of the camera with respect to the planar object is determined and tracked using the edges of the planar object.

Document "Accurate visual metrology from single and multiple uncalibrated images" by Antonio Crimisini describes the theory of computing world measurements from photographs of scenes and reconstructing three-dimensional models of the scene, based on projective geometry.

Document EP2662839 discloses a book and an entertainment device for use in an augmented reality system.

On the basis of the analysis carried out, it emerged that the algorithms that operate in this field provide little specificity, because of the non-simple determination of the information sought and of the poor availability of "general" methods to reach optimal results.

## Summary of the invention

Therefore, the present patent application provides a system according to independent claim 10 and a method according to independent claim 1 that solve the aforesaid and other limits of the prior art solutions.

A system is described for processing digital information, comprising a system for the acquisition of images obtained by a three-dimensional environment containing objects and shapes, which are transferred by perspective transform in the acquired image.

This system implements different methods to reach the determination of dimensional and positional information of elementary geometric figures identified in the images themselves.

The system provides for the use of the information processed from the source images in multiple shapes, among all of which stands out the possibility of creating three-dimensional digital contents to be integrated in the starting images in order to extend the visual contents thereof. However, no less important is the possibility of using the dimension, position and orientation information of the geometric shapes identified to have a metric description of the shot scene.

In particular, the solution proposed herein allows carrying out linear calculations to determine the measurements of an identified geometric shape. In this way, it is possible to utilize the solution even on devices with reduced computing power, for example smartphones.

In a specific case of embodiment, not forming part of the present invention, after framing with a smartphone an opening such as a door or a window on a facade of a building, and having taken a photograph thereof, it is possible to display on the screen a grid having the four vertices that can be moved on the screen so as to position them at the vertices of the framed object. Following this operation, the solution allows recognizing the framed and photographed geometric shape, and it is able to return the measurements of said geometric shape. These processing operations take into consideration that the photograph and the frame of the object (opening - space) are altered by a perspective, because it is not always possible to position oneself in a manner that is completely parallel to the objects to be measured.

At the end of the processing, the solution allows obtaining the dimensions of the object of interest and allows superposing to the identified opening objects selected from a library or catalog, for example gratings, gates, front doors, curtains or other objects.

Therefore, by virtue of the solution described herein it is possible to display superposed objects, which without undergoing deformations, will be dimensioned and positioned so as to adapt them to the opening as it was photographed (i.e. they will be shown according to the same perspective), to show the final effect that could be obtained for example positioning a window or a door on said opening. It is thus possible to take care of each detail, for example assessing the use of a single door or a double door and the end user is able to see the effect that could be obtained installing these objects on the openings of interest, so as to be able to choose the type of product that generates the best impression in the user.

The solution described herein allows obtaining the required dimensional data of the opening (framed object) applying purely linear calculations and relations, avoiding the use of burdensome quadratic calculations, which are not easily carried out on instruments such as smartphones that are provided with limited computing power.

## Brief description of the figures

Further features and advantages of the invention shall become readily apparent from reading the following description provided by way of non-limiting example, with the aid of the figures illustrated in the accompanying drawings, wherein:

- Figure 1 shows a flowchart of the analysis of the images with the identification of geometric figures;
- Figure 2 shows the representation of the pinhole model;
- Figure 3 shows an example of construction of parallelogram constraints;
- Figure 4 shows the image in the system of coordinates used;
- Figure 5 shows a first step of acquiring the images;
- Figure 6 shows an example of automatic extraction of the vertices, and
- Figure 7 shows an example of application.

The component parts of the apparatus according to the present description have been represented in the drawings, when appropriate, with conventional symbols, showing only those specific details that are pertinent to the understanding of the embodiments of the present invention, so as not to highlight details that will be immediately evident, to persons skilled in the art, with reference to the description provided herein.

## Detailed description of the invention

With reference to Figure 1, in step 1 there is described the image analysis system with the identification of geometric shapes and insertion of graphic contents.

In step 2, there is a system for acquiring single, multiple or stereoscopic images. The first component of the processing system is a system for acquiring one or more images from a three-dimensional scene. Photographic sampling can be carried out so as to record a single image or a time sequence of images, from a single photo camera or from a pair or a plurality of photo cameras that concurrently detect pairs/pluralities of frames (see Figure 5).

In step 3, there is a system for recognizing quadrilaterals in the images (see Figure 6).

Thereafter, in step 4 there is the deprojector system for calculating dimensions, positions and orientations in space of the parallelograms.

Subsequently, in step 5 there is a system for relationing elements identified in the different images processed.

Afterwards, in step 6 there is a system for the generation of graphic contents and coherent insertion in the images.

In step 7, lastly, there are the images reprocessed and data relating to geometric figures identified in the shot space.

A method is described for processing digital information, characterized by a system for the acquisition of images obtained by a three-dimensional environment containing objects and shapes, which are transferred by perspective transform in the acquired image. This method implements different methods to reach the determination of dimensional and positional information of elementary geometric figures identified in the images themselves. The calculation method provides for the use of the information processed from the source images in multiple shapes, among all of which stands out the possibility of creating three-dimensional digital contents to be integrated in the starting images in order to extend the visual contents thereof, but no less important is the possibility of using the dimension, position and orientation information of the geometric shapes identified to have a metric description of the shot scene.

In step 2, the first component of the method is a system for acquiring one or more images from a three-dimensional scene that will now be described in detail.

Photographic sampling can be carried out so as to record a single image or a time sequence of images, from a single photo camera or from a pair of photo cameras that concurrently detect pairs of frames. Examples of these scenarios are illustrated in Figure 5.

The intrinsic main parameters of the cameras are considered, in particular the dimension of the receptive sensor, the field of view, the focal length, the resolution of the images, and in the case of stereo vision acquisition, the position and the relative orientation of the two photo cameras (see Figure 2).

The digital information obtained, in the form of images, time information and possibly geometric parameters, are appropriately recorded and made available for the subsequent processing steps.

The system is realized and calibrated with an appropriate calibration that compensates the effects of geometric alteration of the image produced by the optical system of the photo cameras. In such a way that the acquired scene has the characteristics to be processed with means belonging to Euclidean geometry.

In step 3, the part of the processing method having the goal of detecting geometric contents within the acquired images is described.

After fixing a reference system on the image plane, typically at the center thereof with horizontal abscissas axis and vertical ordinates axis, the search for geometric information to be represented in image coordinates is carried out.

Through the use of image processing techniques or with the contribution of the user, in each image the vertices are identified of generic quadrilaterals present therein by effect of the perspective projection of the edges of the objects present in the three-dimensional scene shot by the cameras.

If identification of the vertices is obtained from the action of a user, the computer method provides the interactive instruments to precisely indicate the image points selected as vertices of the quadrilaterals present. If automatic instruments are used instead, multiple known image processing techniques can be implemented, able to determine the image coordinates of the vertices in question. By way of non-comprehensive example, and with reference to Figure 6, an edge detector can be implemented, for example by means of the Sobel algorithm, that produce an image whose content is information about the gradient of light intensity or of chromatic variation, which manifests the presence of contour relating to the objects in the recorded scene. Hence, straight line segments can be sought inside the image obtained with the objective of identifying the four sides constituting generic quadrilaterals present in the scene; for example, it is realized implementing a Hough transform, a technique able to produce a space describing the oriented straight lines present in the image of the contours, to then identify the intersection points of the straight line segments and hence the points of the vertices of the quadrilaterals.

After obtaining the four pairs of coordinates representing the vertices of each quadrilateral recognized within the images, this information is readied for the step of calculating the quantities characterizing the identified geometric figures.

In step 4, the processing technique called deprojection is implemented; it was developed specifically for this application and its purpose is to carry out a calculation sequence able to determine the dimensional and positional parameters of the geometric figure present in the scene shot by the photo cameras, which, by effect of the perspective projection, generated the quadrilateral identified in the image by the calculation system of the preceding step.

Implementation of the projection processing device bases its operating principle on a mathematical model that demonstrates the existence of a biunivocal relation between an element of a family of planar figures, identified in the set of the parallelogram, and the quadrilateral resulting from the projection of said parallelograms identified in the acquired images. A particular quadrilateral is produced by the perspective projection on the sensor of the photo camera from a multitude of parallelograms characterized by different distances and dimensions, which produce the same projected figure, i.e. the quadrilateral in question. To identify one and only one of them it is necessary to provide to the algorithm, in addition to the coordinates of the four vertices in space of the image coordinates, also a characteristic length measurement of the parallelogram, for example the length of one of the sides or, more practically, the distance of one of the vertices from the origin of the coordinate, positioned for simplicity in the focal point of the photo camera that acquired the image. Obviously, this value is unknown because it represents the degree of freedom induced by the projection of a three-dimensional space on the two-dimensional space of the image, so it has to be assumed or measured or estimated or otherwise imposed in the absence of additional information useful to determine it.

Ultimately the deprojection calculation system is provided with four pairs of image coordinates relating to the four vertices of the quadrilateral identified in the image and the measurement, in the shot environment, of the distance from the photo camera of the first of the four vertices of the shot parallelogram.

Subsequently, the calculation procedure followed to implement the deprojection algorithm is described, as well as the mathematical model that underlies the reliability of the results of the processing.

The execution of the processing system called deprojection ends by providing a considerable set of information about the parallelogram that originates the projection in the image of the generic quadrilateral identified. Every measurement is referred to the space shot by the photo camera with respect to a reference system positioned in the focal point of the photo camera.

The results obtained include: position in space of the vertices of the parallelogram, and consequently of its central point; dimension of the sides of the parallelogram; degree of "rectangularity" of the parallelogram, determined by the angle subtended by two adjacent sides; orientation in space, with respect to the orientation of the photo camera, of the surface of the parallelogram exposed towards the shooting photo camera, provided in any known representation (rotation quaternion, direction vector and roll angle, Euler angles, etc.); homographic matrix that places in biunivocal relation the points of the image space and the points belonging to the plane of the parallelogram.

The set of these information is the result of the processing of the deprojection system applied to the data of a single quadrilateral identified in a single image. A similar package of information is obtained for each quadrilateral identified in each image acquired by the processing system.

In step 5, a description is provided of the processing unit able to place in mutual relation the results obtained in the form of packets of information about all the quadrilaterals identified in each image acquired.

When operating with a single image, the resulting information packets are the most complete description obtainable from the detections, as such the next step is carried out acting directly thereon.

When operating with a sequence of images acquired by a single photo camera at predetermined time intervals, it is possible to place the parallelograms identified in each image in relation to each other. In this situation, three cases can be identified.

The photo camera is fixed in space and the shot environment can manifest the presence of immobile or moving geometries: In this case, identifying parallelograms relating to the same objects in each image of the acquired sequence means determining the kinematics of the object detected in the shot space.

The photo camera is in motion in the scene and its position and orientation during motion is known. In this case it is still possible to identify the homologous parallelograms in the sequence of images and to determine the motion kinematics. In particular cases it is also possible to calculate additional information about the distances of the parallelograms in a similar way to the one used with stereovision images, described below.

The photo camera moves freely in the scene, and no information about its motion is available. In this case, identifying homologous parallelograms in the image sequence does not generally allow deducing their motion kinematics, but if there is information that one or more parallelograms in the scene are immobile or their kinematics are known, then it is possible to determine the motion kinematics of the photo camera in space (pose), being opposite to the movement identified for the parallelograms.

When operating with stereovision images, i.e. acquired from two (or more) photo cameras whose relative distance and relative orientation are known, additional information can be deduced from the results calculated in the preceding step. It should be stated that although the method is applicable to variable distances and orientations between the two photo cameras it is definitely more common to find stereovision applications based on the assembly of the two photo cameras on a support that maintains their relative distance unchanged and that allows orienting them with the parallel viewpoint.

In common stereovision image processing systems, the distance of some "key points" is determined identifying, in the pair of images, points that belong to the same area of a same object in the scene, knowing that the two points in the two images are homologous to each other and knowing the distance that separates the two photo cameras, triangulating the position of these points in space is immediate. In the case of this processing system, applying the same known method to the vertices of the homologous parallelograms identified in the two images means determining the distance of these points.

The deprojection calculation system requires the distance of even just one of the vertices of the parallelogram in the space of the scene to univocally determine a single parallelogram (from an infinity of different parallelograms for a scale factor correlated to their distance). Use of stereovision systems thus allows deducing this information from the pair of images rather than estimating it or measuring it specifically.

A description is now provided of step 6 implementing the processing of graphic contents correlated with the images acquired, characterized by being dimensionally and positionally coordinated and consistent with the perspective view of the images.

The result is obtained producing graphic elements whose realization and positioning is "guided" by the parallelograms identified by the processing of the preceding steps. For example, if the quadrilateral present in an image is the projection of the rectangular edge of a window of a home, it is possible to draw a graphic element representing a curtain that can be inserted inside the space by virtue of the knowledge of the dimension of the geometry of the window and of its positioning and spatial orientation.

The information processed in the preceding step provide all the geometric and kinematic elements of each parallelogram deduced from the objects present in the space of the scene, it is then possible to use this information to have a metric knowledge of the distribution of the objects detectable in the space.

This allows using this information directly in applications based on the "comprehension" of the contents of the image, which are typical artificial vision applications. But also to realize an environment adapted for the construction of three-dimensional digital graphic elements adequate in the dimensions and in their positioning and spatial orientation, able to be integrated in the starting images maintaining a consistency of both proportions and perspective therewith. Having also acquired information about the kinematics of the parallelogram and hence of the object that characterizes it, it is possible to produce also animated graphics having said consistency and hence able to be integrated in the acquired sequence, which is a typical activity of augmented reality applications.

The creation of the graphic contents can be made non-jointly with the execution of this processing system, or the numerical results obtained can be used by an operator of a CAD design apparatus for the realization of the desired digital contents, then acting by means of an image editing software to integrate the contents obtained in the images of origin of the processing.

The present processing system typically provides for the integrated implementation of an environment for creating said contents in real time, taking advantage of the reduced calculation times of the deprojection processing. This step then comprises the creation or the integration of an existing three-dimensional environment, for drawing digital contents, able to create, and then to position in the drawing space, objects having the characteristics indicated by the results of the preceding steps, and to generate by rendering an image that is the projection of these artificial graphic element consistent with the identified parallelograms, which "guide" the creation of these elements, then to mix this graphic production with the images of this processing.

Step 6 will now be described in detail with reference to Figure 7. In particular, on the source image there is first superposed the system for manually selecting the vertices, and then the graphics produced consistent with the results. The image on the right shows the superposition of the source image with the graphics generated consistently with the metric information produced by the results.

An integral part of the processing system is the capability of acquiring portions of the starting images to be used as textures applicable to the surfaces of the three-dimensional elements created by means of an operation of removing the perspective.

This operation, generally known as "bird's eye transform", is assured by the application of the homographic transform between the plane identified by the detection of the parallelogram (in particular when it is a rectangle) and the image plane that is perpendicular to the view of the photo camera. The homographic transform matrix is a part of the package of information resulting from the processing of the quadrilaterals.

Once the image lacking perspective is correctly acquired, the three-dimensional drawing environment will apply it correctly to the drawn objects. For example, returning to a previous example, if the image contains the window of a home provided with wooden shades, it will be possible to draw an openable shutter to be positioned in the image consistently with the figure of the shade, provided as texture of the image of the wooden shade itself and to animate the shutter making it seem like a real opening of a window or door.

Step 4 is now described in detail, and in particular a processing system called "deprojector" able to determine the parallelogram present in a space shot starting from the information of the position of the vertices of the quadrilateral produced by the projection of the parallelogram on the shooting sensor and by a supplementary measurement information relating to dimensions or distances of the parallelogram.

The univocal determination of the dimensional and positional information of the parallelogram identified in the space is assured by a mathematical model, described below, developed specifically for this application. The existence of this biunivocal relation between projected parallelograms and quadrilaterals, resulting from the projection, allows generally managing the search for the solutions in the set of the parallelograms, although frequently the objective of the search is that of rectangles in the space; most common geometric shapes and often representing usual objects of the scene.

The processing of the system develops in the sequence of steps described below.

In a step 10 there is the acquisition of the parameters and formalization of the applied model.

The calculation system is developed considering a geometric environment in which there is immersed an image acquisition device, called camera, together with a generic set of objects that represent the subjects of the shooting of the images, according to the canons of the known pinhole model (see Figure 2). Among the structural parameters of the image acquisition system, the following are considered to be known: the size of the optical sensor and the focal length, or alternatively the field of view (commonly known as FOV) from which the focal length is determined.

In the space, known as ambient space, two coordinate systems are considered present: a three-dimensional one relating to the space of the objects and a two-dimensional one relating to the space of the image points, this space is known as screen. The system of coordinates of the ambient space (x, y, z) is positioned in the point of the focal length of the camera, with axis z oriented towards the screen and perpendicular thereto.

The coordinate systems of the image (u, v) is positioned at the center of the screen with the two axes parallel to the respective first two axes of the ambient coordinate system. The screen is positioned at a distance equal to the focal distance on the z coordinate of the reference system of the ambient space.

The algorithm acquires the position of the vertices of the quadrilateral to be processed expressed in image coordinates, i.e. four pairs of values relating to the four vertices considered. Normally, this information is taken from a digital image, which is characterized by a specific resolution in pixel, in this case, knowing the dimensions of the sensor that acquired the image, the positions in pixel can be directly converted into length measurements, and used in the subsequent calculations. The order of the sequence of points is not influent, provided that all processing steps maintain the same sequential order. In this description, the following order is selected: the first point on the screen considered is the bottom left one and the subsequent ones are considered following the clockwise direction. The points of the image space will be the ones named a, b, c, d and the corresponding ones of the parallelogram in the ambient space will be named A, B, C, D.

A length measure, indispensable to identify univocally the parallelogram projecting the examined figure of the quadrilateral, is acquired. Said measure is the distance from the origin of the system of coordinates of the ambient space of one of the vertices of the parallelogram present in said space. In this case, too, which vertex to take into consideration is a matter of indifference.

In this description, the distance of the first point of the screen acquired, i.e. A, is selected.

In step 20, the versors associated with the vertices of the quadrilateral are calculated. The first information deducted from the parameters provided to the system is calculated, i.e. the versors representing the direction, with respect to the origin of the coordinates of the ambient space, of the points relating to the vertices of the quadrilateral present on the screen. Having appropriately aligned the system of coordinates of the image space with that of the ambient space, we can use the coordinates of the points provided in the parameters as the first two coordinates of the system of the ambient space, then instead of calling the axes of the image space u and v they will be directly indicated as x and y.

It is also taken into consideration that the position in the ambient space of the screen is by construction equal to the focal distance of the cameras.

Having to obtain unit vectors, we determine the vector normalization coefficient (for example of the point a):

$$Na = Sqrt(a_x^2 + a_y^2 + f^2)$$

Where $a_x$ and $a_y$ are the Cartesian coordinates of point a, f is the focal distance of the image acquisition system, and sqrt is the square root extraction.

Then, the versor of that point is calculated, which we will indicated as $\overline{da}$ , being referred to point a:

$$\overline{da} = (ax/Na, ay/Na, f/Na)$$

The same is done with the other points:

$$Nb = Sqrt(b_x^2+b_y^2+f^2) \qquad \overline{db} = (bx/Nb, by/Nb, f/Nb)$$

$$Nc = Sqrt(c_x^2+c_y^2+f^2) \qquad \overline{dc} = (cx/Nc, cy/Nc, f/Nc)$$

$$Nd = Sqrt(d_x^2+d_y^2+f^2) \qquad \overline{dd} = (dx/Nd, dy/Nd, f/Nd)$$

Each versor identifies a straight line in the ambient space passing through the origin of the system of coordinates that has the particular characteristic of passing through the corresponding point in the image space, result obtained by construction of the versor, but also from the corresponding vertex of the parallelogram in the ambient space, a consequence of the fact that by projection definition the parallelogram corresponds point by point to the quadrilateral in the image space.

The position of the vertices of the parallelogram in the ambient space is thus determined by the corresponding versor for a coefficient that is nothing other than the distance of that point from the origin of the system of coordinates in space. We call LA, LB, LC, LD the respective coefficients necessary to calculate the positions of the vertices of the parallelogram, these represent the unknowns of the problem, except the first one, LA, which was previously preselected to be the supplementary measure of distance, and passed as parameter.

In a step 30, the calculation constraints satisfying the model are set up.

Identifying the exact solution of the problem passes through the imposition of adequate constraints for the representation of the figure expected as the solution, i.e. the parallelogram.

In the case in question, putting in relation the four vertices taken in the image space with the set of the parallelograms, is not an arbitrary choice, but the specific conclusion of a mathematical model that rigorously assures the identification in the parallelograms, i.e. the most elementary quadrilaterals in which to seek the solution, the demonstration of existence and unicity. The simplest case, i.e. that of the rectangle, is not surjective and in fact it is a particular case of parallelogram. Examining then the angle interposed between two adjacent sides of the parallelogram it is possible to determine the cases, i.e. the groups of four points, that represent a projected rectangle.

The adequate constraints to identify a parallelogram are the following (for a rigorous explanation, see the demonstration described below):

$$A_x - B_x + C_x - D_x = 0$$

$$A_y - B_y + C_y - D_y = 0$$

$$A_z - B_z + C_z - D_z = 0$$

where the points A, B, C, D are expressed by means of their components. Vectorially:

$$\overline{A} - \overline{B} + \overline{C} - \overline{D} = 0$$

In one step 40 there is the resolution of the equation system and its validity.

As mentioned in step 20, the vectorial equations of the points of the vertices of the parallelogram in space are:

$$\overline{A} = LA\,.\,\overline{da} \qquad \overline{B} = LB\,.\,\overline{db} \qquad \overline{C} = LC\,.\,\overline{dc} \qquad \overline{D} = LD\,.\,\overline{dd}$$

Taken as components, replacing these equations in the preceding constraint equations and expressing with respect to LA, the following equation in matrix form is obtained:

$$\begin{vmatrix} db_x & -dc_x & dd_x \\ db_y & -dc_y & dd_y \\ db_z & -dc_z & dd_z \end{vmatrix} * \begin{vmatrix} LB \\ LC \\ LD \end{vmatrix} = LA * \begin{vmatrix} da_x \\ da_y \\ da_z \end{vmatrix}$$

It is a non-homogeneous system of linear equations, and as such it is possible to calculate the determinant of the matrix to verify the validity of the parameters received. If the examined quadrilateral is not degenerate, the mathematical model assures the reversibility of the matrix. In this step the calculation system can then indicate, without proceeding with subsequent calculation, the inadequacy of the data provided. If instead the data are adequate, the resolvability conditions assure the existence of the unique solution of the problem, as indicated in detail in the demonstration of the mathematical model.

The techniques for the resolution of the equation system are multiple and they pertain to known, widely used methods. For example, it is possible to proceed by matrix inversion or by Cramer's method, as well as using LU factorization or even better OR factorization.

Ultimately, the solution obtained is the set of values of LB, LC, LD, by techniques for the resolution of 3x3 linear systems, thus keeping very low the number of operations necessary for numeric calculation.

In one step 50 there is the determination of the vertices in the ambient space of the solution parallelogram.

After obtaining the values of the unknowns LB, LC, LD and already having the value of LA, it is immediately possible to determine the exact position of the vertices of the parallelogram identified:

$$A_x = LA \,.\, da_x \qquad B_x = LB \,.\, db_x \qquad C_x = LC \,.\, dc_x \qquad D_x = LD \,.\, dd_x$$

$$A_y = LA \,.\, da_y \qquad B_y = LB \,.\, db_y \qquad C_y = LC \,.\, dc_y \qquad D_y = LD \,.\, dd_y$$

$$A_z = LA \,.\, da_z \qquad B_z = LB \,.\, db_z \qquad C_z = LC \,.\, dc_z \qquad D_z = LD \,.\, dd_z$$

The central point of the geometric figure, indicated as PC here, can also be calculated, for example by means of:

$$PC_x = (LA \,.\, da_x + LC \,.\, dc_x) / 2$$

$$PC_y = (LA \,.\, da_y + LC \,.\, dc_y) / 2$$

$$PC_z = (LA \,.\, da_z + LC \,.\, dc_z) / 2$$

Useful to identify the barycentric position of the figure in the ambient space, hence its mean distance.

In a step 60, the geometric quantities defining the solution parallelogram are determined.

The results calculated in the preceding steps allow determining, with simple geometric relations, all the quantities relating to the identified parallelogram.

The dimensions of the parallelogram are given by the modulus of the vectors of two of the adjacent sides, for example considering the segments AB and AD:

$$\overrightarrow{AB} = \overrightarrow{B} - \overrightarrow{A} \qquad \text{we say this is the height:} \qquad H = |\overrightarrow{AB}|$$

$$\overrightarrow{AD} = \overrightarrow{D} - \overrightarrow{A} \qquad \text{we say this is the width:} \qquad L = |\overrightarrow{AD}|$$

It is possible to calculate the vectors of the diagonals, whose equality would imply being in the presence of a rectangle parallelogram:

$$\overline{AC} = \overline{C} - \overline{A} \text{ the length of the corresponding diagonal: } D1 = |\overline{AC}|$$

$$\overline{BD} = \overline{D} - \overline{B} \text{ the length of the corresponding diagonal: } D2 = |\overline{BD}|$$

The orientation of the exposed surface of the parallelogram with respect to the central axis of shooting of the camera, i.e. the z axis, can be represented in multiple forms. For example, it is possible to calculate the versor perpendicular to the surface of the parallelogram to provide the direction of the visible face thereof and the versor parallel to the side related to height, hence AB, to indicate the roll rotation on the preceding axis with respect to the vertical axis of the reference system of the ambient space, i.e. y.

These are the vectorial calculations:

$$\overline{FRONT} = (\overline{AC} / |\overline{AC}|) \ X \ (\overline{BD} / |\overline{BD}|)$$

$$\overline{UP} = \overline{AB} / |\overline{AB}|$$

Where "X" represents the vectorial product. Obviously, it is possible to express the orientation of the parallelogram with respect to the coordinate system of the camera in many other forms, for example providing a sequence of Euler angles or by rotation quaternion. In all cases the transformation rules are known and usable for convenience.

A value is calculated that allows measuring the degree of perpendicularity of the adjacent sides of the parallelogram. This data item is useful in relation to the fact that oftentimes the objective of the search for the solution is not a generic parallelogram but in particular a rectangle. Because of the inevitable errors introduced by the quantification due to the resolution of the processed images, it is possible for the parallelogram to be an approximation of the sought rectangle and, as such, although it is not rectangle, the adjacent sides must be reasonably close to a 90° angle.

In the following way, a value between 0 and 1, indicating said perpendicularity, can be calculated:

$$ORTHO = < \overline{AB} / |\overline{AB}|, \overline{AD} / |\overline{AD}| >$$

Where "< , >" represents the scalar product of vectors. The calculation system, in this step, is then able to determine whether the result identifies a rectangle parallelogram barring an appropriately provided error index: ORTHO $< \varepsilon$, discriminating, for the cases in which it is of interest to identify only rectangles, which case represents the quadrilateral present in the image.

In a step 70, the homography subtended by the solution parallelogram is defined.

Knowledge of the parallelogram present in the ambient space, and in particular its position and orientation, allows having an additional result available, i.e. the possibility of establishing the homographic relation between the plane of the parallelogram and the image plane.

Commonly identifying the homographic matric passes through setting up equation systems with matrices of considerable size, sometimes poorly conditioned, based on the knowledge of homologous points both in the plane of origin and in the plane of destination.

In the case in question, from the results, we know the versors of the plane of the parallelogram, i.e. the vectors of the adjacent sides in point A, as well as the position vector of the parallelogram. This allows immediately writing the roto-translation matrix between the image plane and the location of the parallelogram.

Naturally, operating with rectangles is more adequate, since the versors will be orthogonal, but nothing prevents, in the presence of a parallelogram, orthogonalizing modifying one of the two vectors (or even both in specific cases), to obtain an adequate Cartesian reference, for example:

$(u', v') : u' = AD; v' = AB; v'' = v'; u'' = u' - v' * < u', v' > / < v', v' >$

$(u , v) : v = v' / \| v'' \| ; u = u'' / \| u'' \|$ ; orthonormal Versors

The axes of the image space being intentionally aligned to those of the ambient space, the rotation matrix R is in fact the matrix having the identified versors as column vectors, while the position vector of the center of the parallelogram, known from the solution, is called t.

Passing to the use of homogeneous coordinates, we indicate the point in the image plane x=(x, y, 1) as the transform of the point X=(X, Y, 1) in the plane of the parallelogram, and indicate the transformation with the matrix representation of the homography H = K [R | t] (omitting the multiplicative parameter that is irrelevant):
x = K [ u, v, t ] X or also x = H X

Where K is the matrix of the intrinsic parameters of the camera, which we consider to be known *a priori.* Naturally, being a homography, the matrix H is invertible, hence it is simple to obtain the inverse mapping relation.

Use of the deprojector calculation procedure is particularly useful and advantageous not only for the specificity and completeness of the solution provided, but also for the considerable simplicity of the necessary calculations. Being included in a very small linear calculation model, the entire algorithm is implementable with a small number of floating-point operations, allowing obtaining computing times of the order of tens or thousands of microseconds in modern microprocessors, a particularly useful aspect in real-time applications and on mobile devices.

A model for shooting images is described, characterized by a two-dimensional planar sensor with dimensions *h* x *w* and an optical system characterizing the presence of a focal point at distance *f* from the plane of the sensor, which models the typical device for acquiring images of an ambient space commonly called "pin-hole model", as illustrated in Figure 2.

A system of coordinates in $\mathbb{R}^3$ is positioned at the focal point of said optical system, having **z** axis perpendicular to the sensor plane and directed towards the shot space, hence such that the sensor plane is positioned at a negative value of the **z** axis equal to the focal length, and also having axis **y** directed towards the dimension *h* of the sensor and **x** axis directed like the dimension *w* of the sensor. Let the term "screen" indicate a plane having the same geometric dimensions and orientation of the sensor and parallel thereto but positioned at a positive value of the **z** axis equal to the focal length, characterized in that it is the locus of the projection of the shot points from the ambient space, which will have identical position to that of the points projected on the sensor plane but without suffering from the reflection of the axes produced by the passage of the rays from the focal point.

The position of the points on the surface of the screen is referred to a system of coordinates in $\mathbb{R}^2$ positioned in the central point of the screen, the axes **u** and **v** of $\mathbb{R}^2$ lie on the plane of the screen and are such as to have **v** axis parallel to the **y** axis and **u** axis parallel to the **x** axis of the in $\mathbb{R}^3$.

Given a pinhole system of the type described, let *Q* be the set of all possible planar quadrilaterals in $\mathbb{R}^2$ on the plane of the screen and let *P* be the set of all possible planar parallelograms in $\mathbb{R}^3$ in the ambient space. Given an element $q \in Q$ let **a**=(au,av), **b**=(bu,bv), **c**=(cu,cv), **d**=(du,dv) be the points identified by the vertices of *q* expressed as coordinates of the reference system in $\mathbb{R}^2$ and given an element $p \in P$ let **A**=(Ax,Ay,Az), **B**=(Bx,By,Bz), **C**=(Cx,Cy,Cz), **D**=(Dx,Dy,Dz), be the points identified by the vertices of p expressed in the system of coordinates in $\mathbb{R}^3$. Then considering an element $q \in Q$ and knowing the values of the coordinates of its points **a, b, c, d** and defining *k* as the distance from the origin of the system of coordinates in $\mathbb{R}^3$ of any single one of said points, then there is a single parallelogram $p \in P$ whose projection on the plane of the screen generates the quadrilateral *q*:

$$\forall\, \underline{q} \in Q \;\; \text{con}\; k = d(O_R^3, A),\;\; \exists!\, \underline{p} \in P: \text{proj}(\underline{p}) \equiv \underline{q}$$

Given a distance measurement *k* and given a quadrilateral *q* lying on the screen, what is to be demonstrated is the existence of a single parallelogram *p* present in the ambient space, whose projection generates *q,* characterized by having distance *k* of one of its vertices from the origin of the system of coordinates in $\mathbb{R}^3$. Arbitrarily, we will consider as distance *k* the one relating to the point **A,** but obviously the same conclusions will be obtained choosing any other vertex of *p.*

The four versors are defined, indicated with **da, db, dc, dd,** risen from the origin of the system of coordinates in $\mathbb{R}^3$ directed towards the points **a, b, c, d** on the screen identifying the vertices of the quadrilateral *q,* or equivalently directed towards the points **A, B, C, D** in the ambient space identifying the vertices of the sought parallelogram. This equivalency is such because the points **a, b, c, d** being, by assumption, the projection on the screen of the points **A, B, C, D** then the pair of points **a** and **A** belongs to a same straight line passing through the origin $O_R^3$, as do the pairs of points **b and B, c** and **C, d** and **D.**

The points **A, B, C** and **D** are then identified by the product of the four versors **da, db, dc, dd** respectively with four scalars, indicated as *LA, LB, LC* and *LD.* The calculation of the versors is as follows:

$$\gamma = a, b, c, d$$

$$N_\gamma = sqrt(\gamma_u^2 + \gamma_v^2 + f^2)$$

$$\mathbf{d\gamma} = (\gamma_u, \gamma_v, f) / N_\gamma$$

A set of conditions is now to be imposed, such as to constrain the points **A, B, C, D** to represent the vertices of a planar parallelogram in $\mathbb{R}^3$. For this purpose, a generic parallelogram is constructed starting from a generic straight line segment **L** whose ends are indicated by the point **m**=($m_x$,$m_y$,$m_z$) and **n**=($n_x$,$n_y$,$n_z$) and by a generic vector **S**=($S_x$, $S_y$,$S_z$) used as displacement method, see Figure 3.

If we consider a second straight line segment **L',** with ends m'=($m'_x$,$m'_y$,$m'_z$) and n'=($n'_x$,$n'_y$,$n'_z$) parallel to **L** but translated in space in such a way that driving the vector **S** in the point **m** of **L** the point **m'** of **L'** is identified, as a consequence of the parallelism of **L and L'** it will be possible to say that the point **n** also moves in **n'** by effect of the application of the same vector **S** on **n.** In this way, joining together the straight line segments and the two vectors **S** applied to the end points of **L,** a planar parallelogram is composed. Each planar parallelogram in a space can be composed of an appropriate segment **L** and appropriate vector **S.**

In algebraic terms we can say that the following apply:

$$\mathbf{m' = m + S:} \quad m'_x = m_x + S_x \quad m'_y = m_y + S_y \quad m'_z = m_z + S_z$$

$$\mathbf{n' = n + S:} \quad n'_x = n_x + S_x \quad n'_y = n_y + S_y \quad n'_z = n_z + S_z$$

Hence:

$$m'_x - n'_x = m_x + S_x - n_x - S_x = m_x - n_x$$

$$m'_y - n'_y = m_y + S_y - n_y - S_y = m_y - n_y$$

$$m'_z - n'_z = m_z + S_z - n_z - S_z = m_z - n_z$$

Assigning the letters **A, B, C, D** respectively to the points **m, n, n', m'** this system is obtained:

$$D_x - C_x = A_x - B_x$$

$$D_y - C_y = A_y - B_y$$

$$D_z - C_z = A_z - B_z$$

Or, in vectorial terms:

$$\overline{A} + \overline{C} = \overline{B} + \overline{D}$$

These are the equations that condition a planar quadrilateral to be a parallelogram.

In other words, the general rule applies that for a planar parallelogram in a three-dimensional space the sum of the vectors of the vertices of the longer diagonal is equal to the sum of the vectors of the vertices of the shorter diagonal.

If in them we express the representation of the points **A, B, C, D** by means of versors **da, db, dc, dd** we obtain in vectorial form:

LA. **da** - LB . **db** + LC. **de** - LD. **dd** = 0

I.e. three equations in the four unknowns LA, LB, LC, LD. However, the latter are the distances of the four respective points from the origin of the system of coordinates of the ambient space, and since among the assumptions one of the distances is considered known, by assumption let it be LA, then we can rewrite the system in the following way, for convenience in matrix form:

$$\begin{vmatrix} db_x & -dc_x & dd_x \\ db_y & -dc_y & dd_y \\ db_z & -dc_z & dd_z \end{vmatrix} \begin{vmatrix} LB \\ LC \\ LD \end{vmatrix} = LA \begin{vmatrix} da_x \\ da_y \\ da_z \end{vmatrix}$$

The solution of the non-homogeneous linear system of three equations in three unknowns assures the existence and unicity of the solution if the rank of the complete matrix is maximum. In this case, all the unknowns LB, LC, LD are determined and with them the position of the points in space representing the vertices of the parallelogram:

**A** = LA. **da B = LB . db C=LC.dc D = LD . dd**

If the complete matrix did not have maximum rank, it would mean being in the presence of linear dependence between the columns of the complete matrix, taken in groups of three. However, these columns are the versors directed towards the vertices of the quadrilateral *q*, said linear dependence would imply alignment between the vertices present on the plane of the screen. Since a quadrilateral degenerates if at least three of its four vertices are aligned, the rank will always be maximum in the presence of a valid quadrilateral. Thus, as was to be demonstrated, there always is one and only one solution identified in the set of the parallelograms.

## Claims

1. Method for recognizing and determining the dimensions and the position in a 3D space of geometric shapes comprising the following steps:

    a) Acquiring one single image or a plurality of images in a time sequence, of a geometric shape, in the 3D space, using at least one camera,
    b) recognizing at least one image space quadrilateral (abed), if present, inside the one or more images acquired, said image space quadrilateral being the projection of a 3D space quadrilateral (ABCD),
    c) determining four pairs of coordinates representing the vertices of said at least one image space quadrilateral detected,
    d) determining a length measurement of one of the sides of said 3D space quadrilateral detected or the distance between one of the vertices of said 3D space quadrilateral detected and said at least one camera,
    e) establishing a system of coordinates in the 3D space,
    f) determining the direction, with respect to the origin of the system of coordinates in the 3D space, of the vertices of the 3D space quadrilateral,
    g) imposing the constraint that the 3D space quadrilateral is a parallelogram,
    h) determining the vectorial equations of the vertices of the parallelogram in the 3D space,
    i) calculating the position of the vertices of the parallelogram in the 3D space by solving said vectorial equations,
    j) determining the geometric quantities and dimensions of the parallelogram in the 3D space,

2. Method according to claim 1, comprising the further step:
    k) processing graphic contents correlated with the one or more images acquired, said graphic contents being **characterized by** being dimensionally and positionally coordinated and consistent with the perspective view of the one or more images acquired.

3. Method according to one or more of the preceding claims, wherein in step a) single, multiple or stereoscopic images are acquired, and photographic sampling is carried out so as to record a single image or a time sequence of images, from a single photo camera or from a pair or a plurality of photo cameras that concurrently detect pairs/pluralities of frames.

4. Method according to one or more of the preceding claims, wherein in step b) the geometric contents are identified by a user or with automatic instruments that employ image processing techniques able to determine the image coordinates of the vertices through the implementation of a detection method.

5. Method according to claim 4, wherein in step b) straight line segments are sought inside the image obtained with the objective of identifying the four sides constituting quadrilaterals present in the scene implementing an edge detector followed by a Hough transformed.

6. Method according to one or more of the preceding claims, wherein step j) provides, as a result, the position in space of the vertices of the parallelogram identified, the dimension of the sides of the parallelogram, the degree of perpendicularity of the two adjacent sides of the parallelogram, the orientation in space, with respect to the orientation of the photo camera, of the surface of the parallelogram and the homographic matrix.

7. Method according to one or more of the preceding claims, wherein, if in step a) a plurality of images is acquired in a time sequence:

if the camera is fixed in space, the kinematics of the detected object in space is determined by identifying the parallelogram relating to the detected object in the acquired sequence of images;
if the camera is in motion in the scene and its position and its orientation during motion are known, the kinematics of the detected object in space is determined by identifying the parallelogram relating to the detected object in the acquired sequence of images;
if the camera moves freely in the scene, and no information about the motion of the photo camera is available and information is available about the kinematics of at least one detected parallelogram, the motion kinematics of the photo camera in space is determined.

8. Method according to one or more of the preceding claims, wherein, if in step a) stereo visual images are acquired, the distance of points relating to objects present in both stereo visual images is determined by triangulation able to provide the measurement of the distance of the photo camera from one of the four vertices of the shot parallelogram.

9. Method according to the preceding claim, wherein said at least one graphic element is combined with the acquired images.

10. System for recognizing geometric shapes comprising one or more photo camera to frame a three-dimensional scene and one or more processing devices to carry out the steps of the method according to one or more of the claims from 1 to 9.

## Patentansprüche

1. Verfahren zur Erkennung und Bestimmung der Abmessungen und der Position von geometrischen Formen in einem 3D-Raum, das die folgenden Schritte umfasst:

a) Erfassen eines Einzelbilds oder einer Vielzahl von Bildern in einer zeitlichen Abfolge einer geometrischen Form in dem 3D-Raum unter Verwendung mindestens einer Kamera,
b) Erkennen von mindestens einem Bildraumviereck (abcd), falls vorhanden, in einem oder mehreren erfassten Bildern, wobei das Bildraumviereck die Projektion eines 3D-Raumvierecks (ABCD) ist,
c) Bestimmen von vier Koordinatenpaaren, die die Eckpunkte des mindestens einen detektierten Bildraumvierecks darstellen,
d) Bestimmen einer Längenabmessung einer der Seiten des detektierten 3D-Raumvierecks oder des Abstands zwischen einem der Eckpunkte des detektierten 3D-Raumvierecks und der mindestens einen Kamera,
e) Festlegen eines Koordinatensystems in dem 3D-Raum,
f) Bestimmen der Richtung der Eckpunkte des 3D-Raumvierecks in Bezug auf den Ursprung des Koordinatensystems im 3D-Raum,
g) Auferlegen der Bedingung, dass das 3D-Raumviereck ein Parallelogramm ist,
h) Bestimmen der vektoriellen Gleichungen der Eckpunkte des Parallelogramms in dem 3D-Raum,
i) Berechnen der Position der Eckpunkte des Parallelogramms in dem 3D-Raum durch Lösen der vektoriellen Gleichungen,
j) Bestimmen der geometrischen Größen und Abmessungen des Parallelogramms in dem 3D-Raum,

2. Verfahren nach Anspruch 1, umfassend den weiteren Schritt:
k) Verarbeiten von grafischen Inhalten, die mit dem einen oder den mehreren erfassten Bildern korreliert sind, wobei die grafischen Inhalte **dadurch gekennzeichnet sind, dass** sie abmessungstechnisch und positionstechnisch koordiniert sind und mit der perspektivischen Ansicht des einen oder der mehreren erfassten Bilder übereinstimmen.

3. Verfahren nach einem oder mehreren der vorhergehenden Ansprüche, wobei in Schritt a) Einzel-, Mehrfach- oder Stereoskopbilder erfasst werden und eine fotografische
Abtastung durchgeführt wird, um ein Einzelbild oder eine zeitliche Abfolge von Bildern von einer einzelnen Fotokamera oder von einem Paar oder einer Vielzahl von Fotokameras aufzuzeichnen, die gleichzeitig Paare/Vielzahlen von Frames detektieren.

4. Verfahren nach einem oder mehreren der vorhergehenden Ansprüche, wobei in Schritt b) die geometrischen Inhalte von einem Benutzer oder mit automatischen Instrumenten identifiziert werden, die Bildverarbeitungstechniken verwenden, die in der Lage sind, die Bildkoordinaten der Eckpunkte durch die Anwendung eines Detektionsverfahrens zu bestimmen.

5. Verfahren nach Anspruch 4, wobei in Schritt b) in dem erhaltenen Bild nach geradlinigen Segmenten mit dem Ziel gesucht wird, die vier Seiten zu identifizieren, die die in der Szene vorhandenen Vierecke bilden, wobei ein Kantendetektor gefolgt von einer Hough-Transformation eingesetzt wird.

6. Verfahren nach einem oder mehreren der vorhergehenden Ansprüche, wobei Schritt j) als Ergebnis die Position im Raum der identifizierten Eckpunkte des Parallelogramms, die Abmessung der Seiten des Parallelogramms, den Grad der Rechtwinkligkeit der beiden benachbarten Seiten des Parallelogramms, die Orientierung der Oberfläche des Parallelogramms im Raum in Bezug auf die Orientierung der Fotokamera und die homografische Matrix bereitstellt.

7. Verfahren nach einem oder mehreren der vorhergehenden Ansprüche, wobei, wenn in Schritt a) eine Vielzahl von Bildern in einer zeitlichen Abfolge erfasst wird:

wenn die Kamera im Raum fixiert ist, die Kinematik des detektierten Objekts im Raum durch Identifizieren des Parallelogramms, das sich auf das detektierte Objekt in der erfassten Abfolge von Bildern bezieht, bestimmt wird;
wenn die Kamera in der Szene in Bewegung ist und ihre Position und ihre Orientierung während der Bewegung bekannt sind, die Kinematik des detektierten Objekts im Raum durch Identifizieren des Parallelogramms, das sich auf das detektierte Objekt in der erfassten Abfolge von Bildern bezieht, bestimmt wird;
wenn sich die Kamera in der Szene frei bewegt und keine Informationen über die Bewegung der Fotokamera verfügbar sind und Informationen über die Kinematik des mindestens einen detektierten Parallelogramm verfügbar sind, die Bewegungskinematik der Fotokamera im Raum bestimmt wird.

8. Verfahren nach einem oder mehreren der vorhergehenden Ansprüche, wobei, wenn in Schritt a) visuelle Stereobilder erfasst werden, der Abstand von Punkten, die sich auf Objekte beziehen, die in beiden visuellen Stereobildern vorhanden sind, durch Triangulation bestimmt wird, die in der Lage ist, die Messung des Abstands der Fotokamera von einem der vier Eckpunkte des aufgenommenen Parallelogramms bereitzustellen.

9. Verfahren nach dem vorhergehenden Anspruch, wobei das mindestens eine grafische Element mit den erfassten Bildern kombiniert wird.

10. System zur Erkennung geometrischer Formen, das eine oder mehrere Fotokameras zum Erfassen einer dreidimensionalen Szene und eine oder mehrere Verarbeitungsvorrichtungen zur Durchführung der Schritte des Verfahrens nach einem oder mehreren der Ansprüche 1 bis 9 umfasst.

## Revendications

1. Procédé de reconnaissance et de détermination des dimensions et de la position dans un espace 3D de formes géométriques comprenant les étapes suivantes :

a) Acquérir une seule image ou une pluralité d'images dans une séquence temporelle, d'une forme géométrique, dans l'espace 3D, à l'aide d'au moins une caméra,

b) reconnaître au moins un quadrilatère d'espace image (abcd), s'il est présent, à l'intérieur de l'une ou plusieurs images acquises, ledit quadrilatère d'espace image étant la projection d'un quadrilatère d'espace 3D (ABCD),
c) déterminer quatre paires de coordonnées représentant les sommets dudit au moins un quadrilatère d'espace image détecté,
d) déterminer une mesure de longueur de l'un des côtés dudit quadrilatère d'espace 3D détecté ou la distance entre l'un des sommets dudit quadrilatère d'espace 3D détecté et ladite au moins une caméra,
e) établir un système de coordonnées dans l'espace 3D,
f) déterminer la direction, par rapport à l'origine du système de coordonnées dans l'espace 3D, des sommets du quadrilatère d'espace 3D,
g) imposer la contrainte que le quadrilatère d'espace 3D est un parallélogramme,
h) déterminer les équations vectorielles des sommets du parallélogramme dans l'espace 3D,
i) calculer la position des sommets du parallélogramme dans l'espace 3D en résolvant lesdites équations vectorielles,
j) déterminer les grandeurs géométriques et les dimensions du parallélogramme dans l'espace 3D,

**2.** Procédé selon la revendication 1, comprenant l'étape supplémentaire :
k) traiter des contenus graphiques corrélés avec l'une ou plusieurs images acquises, lesdits contenus graphiques étant **caractérisés en ce qu'**ils sont coordonnés dimensionnellement et positionnellement et cohérents avec la vue en perspective de l'une ou plusieurs images acquises.

**3.** Procédé selon une ou plusieurs des revendications précédentes, dans lequel à l'étape a), des images seules, multiples ou stéréoscopiques sont acquises, et l'échantillonnage photographique est effectué de manière à enregistrer une seule image ou une séquence temporelle d'images, à partir d'une seule caméra photo ou d'une paire ou d'une pluralité de caméras photo qui détectent simultanément des paires/pluralités d'images.

**4.** Procédé selon une ou plusieurs des revendications précédentes, dans lequel à l'étape b) les contenus géométriques sont identifiés par un utilisateur ou avec des instruments automatiques qui emploient des techniques de traitement d'image capables de déterminer les coordonnées d'image des sommets par la mise en oeuvre d'un procédé de détection.

**5.** Procédé selon la revendication 4, dans lequel à l'étape b) des segments de droite sont recherchés à l'intérieur de l'image obtenue dans le but d'identifier les quatre côtés constituant des quadrilatères présents dans la scène mettant en oeuvre un détecteur de bord suivi d'une transformée de Hough.

**6.** Procédé selon une ou plusieurs des revendications précédentes, dans lequel l'étape j) fournit, en conséquence, la position dans l'espace des sommets du parallélogramme identifié, la dimension des côtés du parallélogramme, le degré de perpendicularité des deux côtés adjacents du parallélogramme, l'orientation dans l'espace, par rapport à l'orientation de la caméra photo, de la surface du parallélogramme et de la matrice homographique.

**7.** Procédé selon une ou plusieurs des revendications précédentes, dans lequel, si à l'étape a) une pluralité d'images est acquise dans une séquence temporelle :

si la caméra est fixe dans l'espace, la cinématique de l'objet détecté dans l'espace est déterminée en identifiant le parallélogramme relatif à l'objet détecté dans la séquence d'images acquise ;
si la caméra est en mouvement dans la scène et sa position et son orientation pendant le mouvement sont connus, la cinématique de l'objet détecté dans l'espace est déterminée en identifiant le parallélogramme relatif à l'objet détecté dans la séquence d'images acquise ;
si la caméra se déplace librement dans la scène, et aucune information sur le mouvement de la caméra photo n'est disponible et des informations sont disponibles sur la cinématique d'au moins un parallélogramme détecté, la cinématique de mouvement de la caméra photo dans l'espace est déterminée.

**8.** Procédé selon une ou plusieurs des revendications précédentes, dans lequel, si à l'étape a) des images visuelles stéréo sont acquises, la distance des points relatifs aux objets présents dans les deux images visuelles stéréo est déterminée par triangulation capable de fournir la mesure de la distance de la caméra photo à partir de l'un des quatre sommets du parallélogramme de prise de vue.

**9.** Procédé selon la revendication précédente, dans lequel ledit au moins un élément graphique est combiné avec les images acquises.

**10.** Système de reconnaissance de formes géométriques comprenant une ou plusieurs caméras photo pour encadrer une scène tridimensionnelle et un ou plusieurs dispositifs de traitement pour réaliser les étapes du procédé selon une ou plusieurs des revendications de 1 à 9.

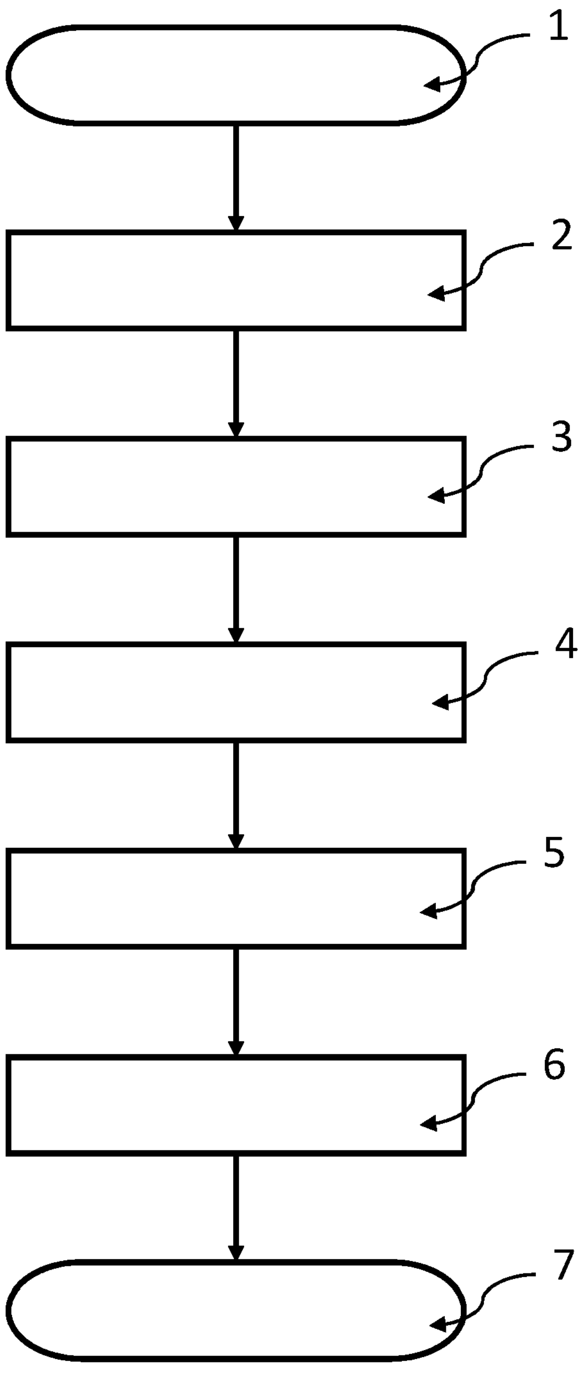


FIG. 1

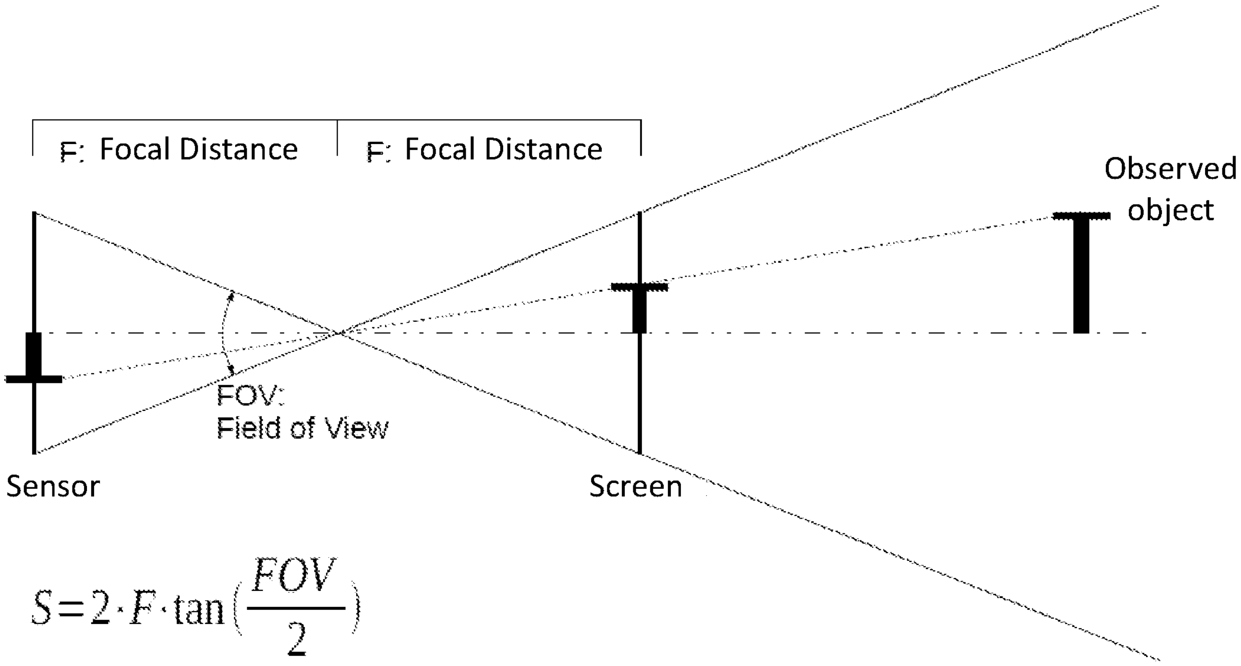
F: Focal Distance
F: Focal Distance
Observed object
FOV:
Field of View
Sensor
Screen
$S = 2 \cdot F \cdot \tan(\frac{FOV}{2})$

*FIG. 2*

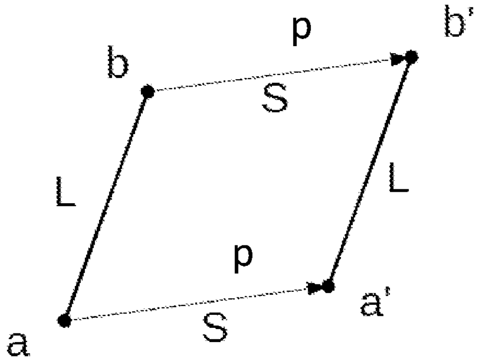
p
b'
b
S
L
L
p
a'
a
S

*FIG. 3*

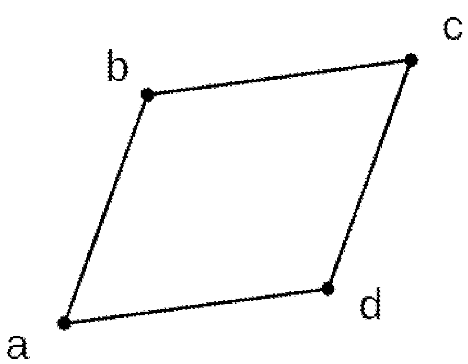
c
b
d
a

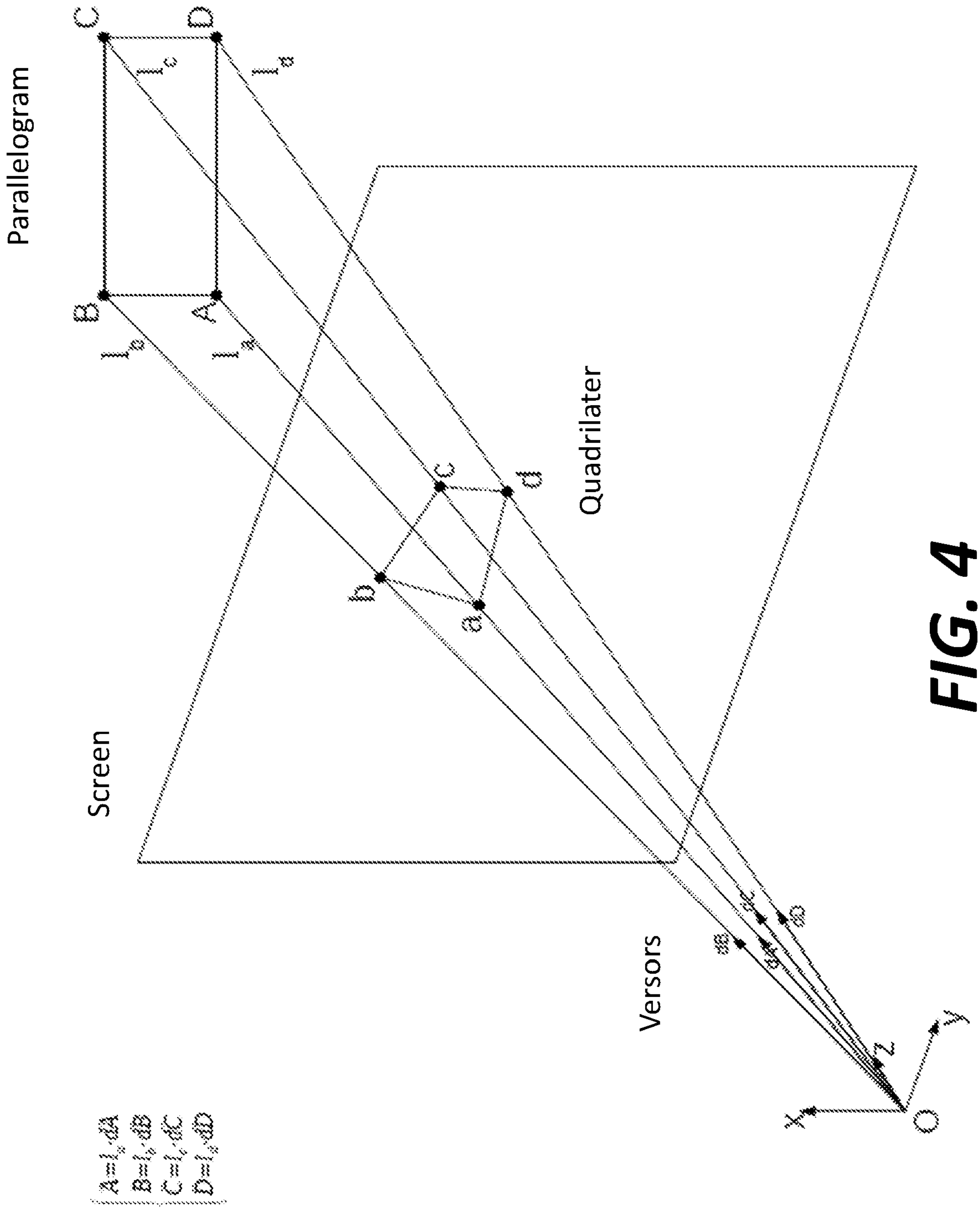
Parallelogram
Screen
Versors
Quadrilater
A
B
C
D
a
b
c
d
O
x
y
z
A=l_a·dA
B=l_b·dB
C=l_c·dC
D=l_d·dD

FIG. 4

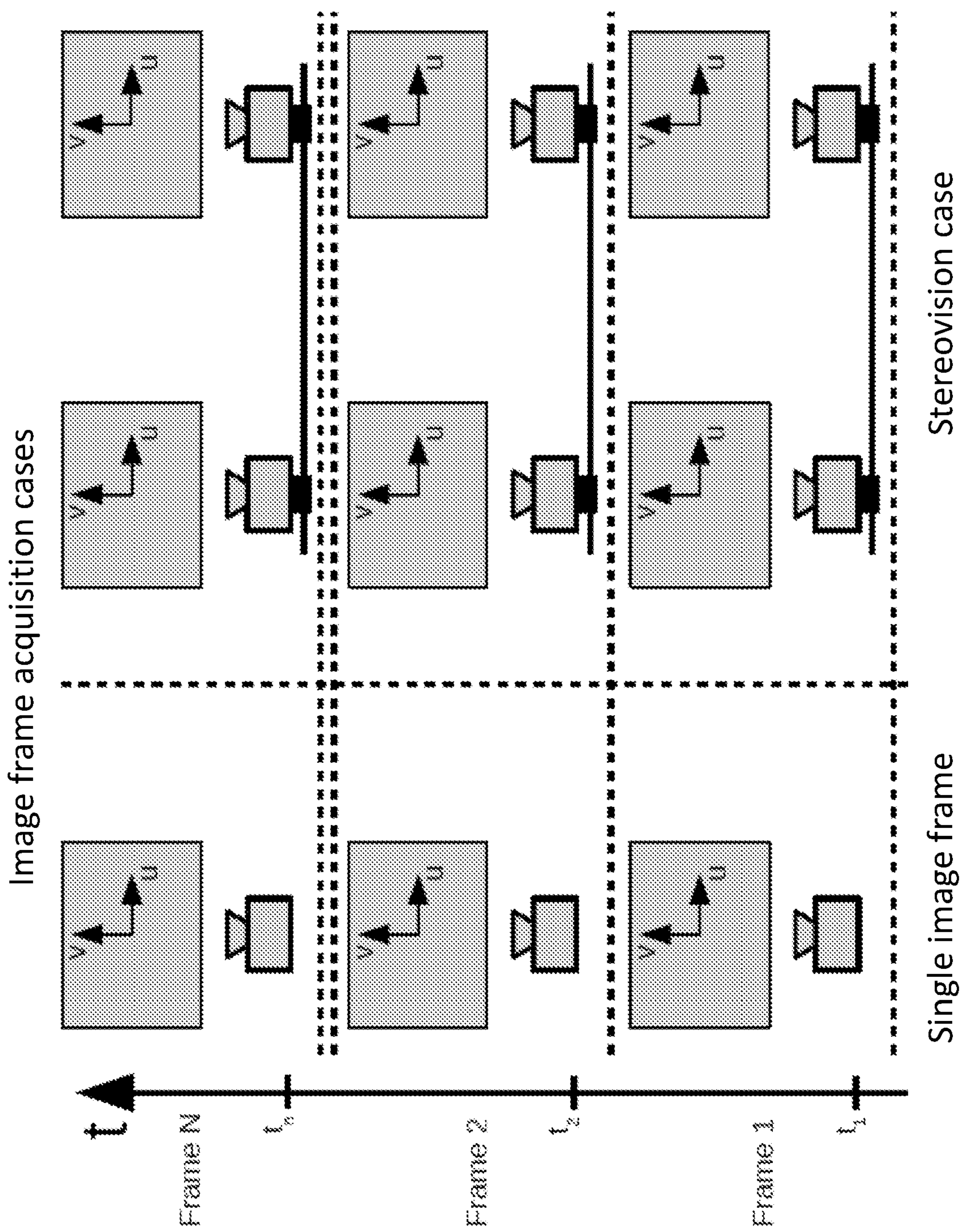
Image frame acquisition cases
Single image frame
Stereovision case
t
Frame N
$t_n$
Frame 2
$t_2$
Frame 1
$t_1$
u
v

*FIG. 5*

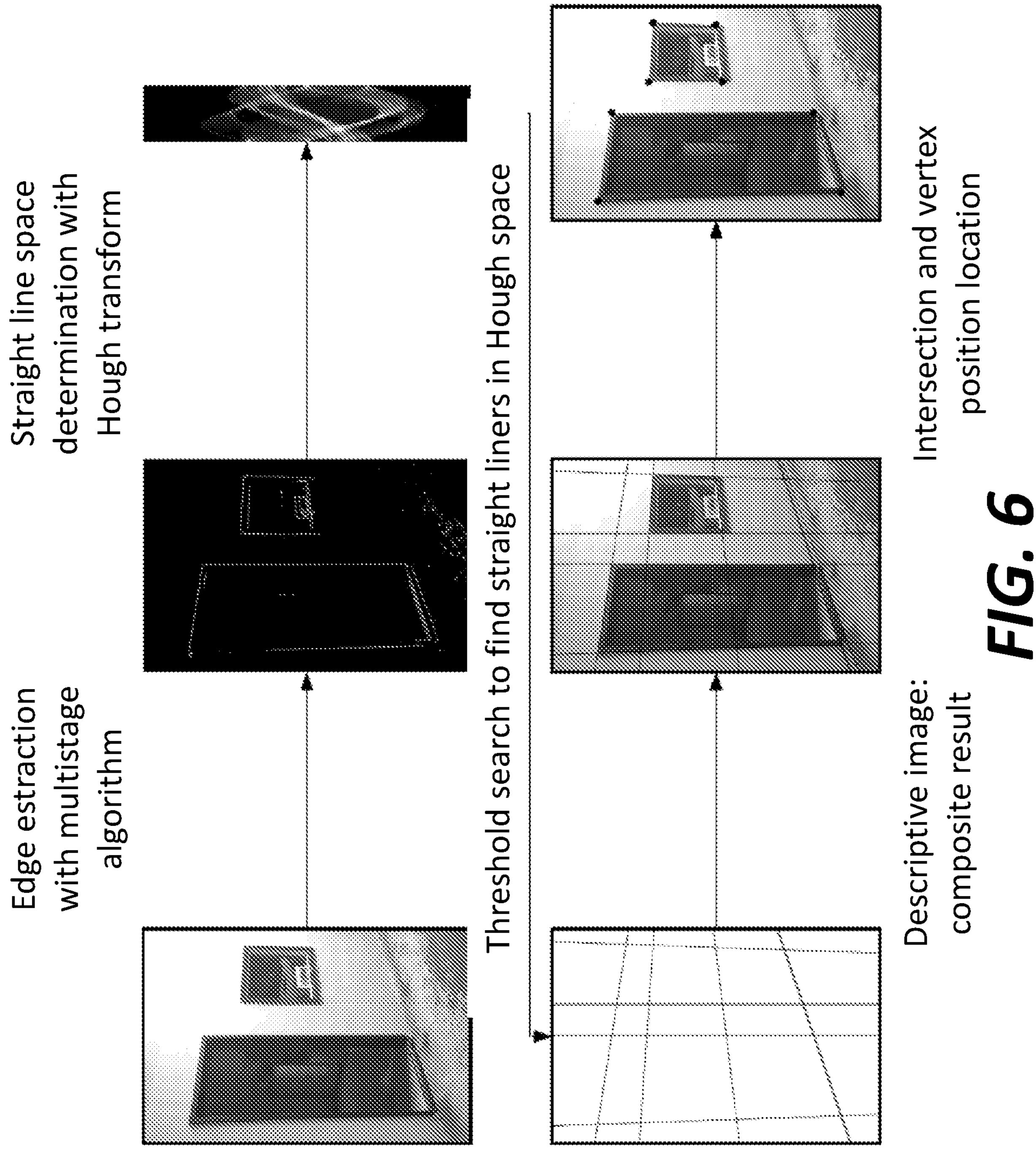
Edge estraction with multistage algorithm
Straight line space determination with Hough transform
Threshold search to find straight liners in Hough space
Descriptive image: composite result
Intersection and vertex position location

FIG. 6

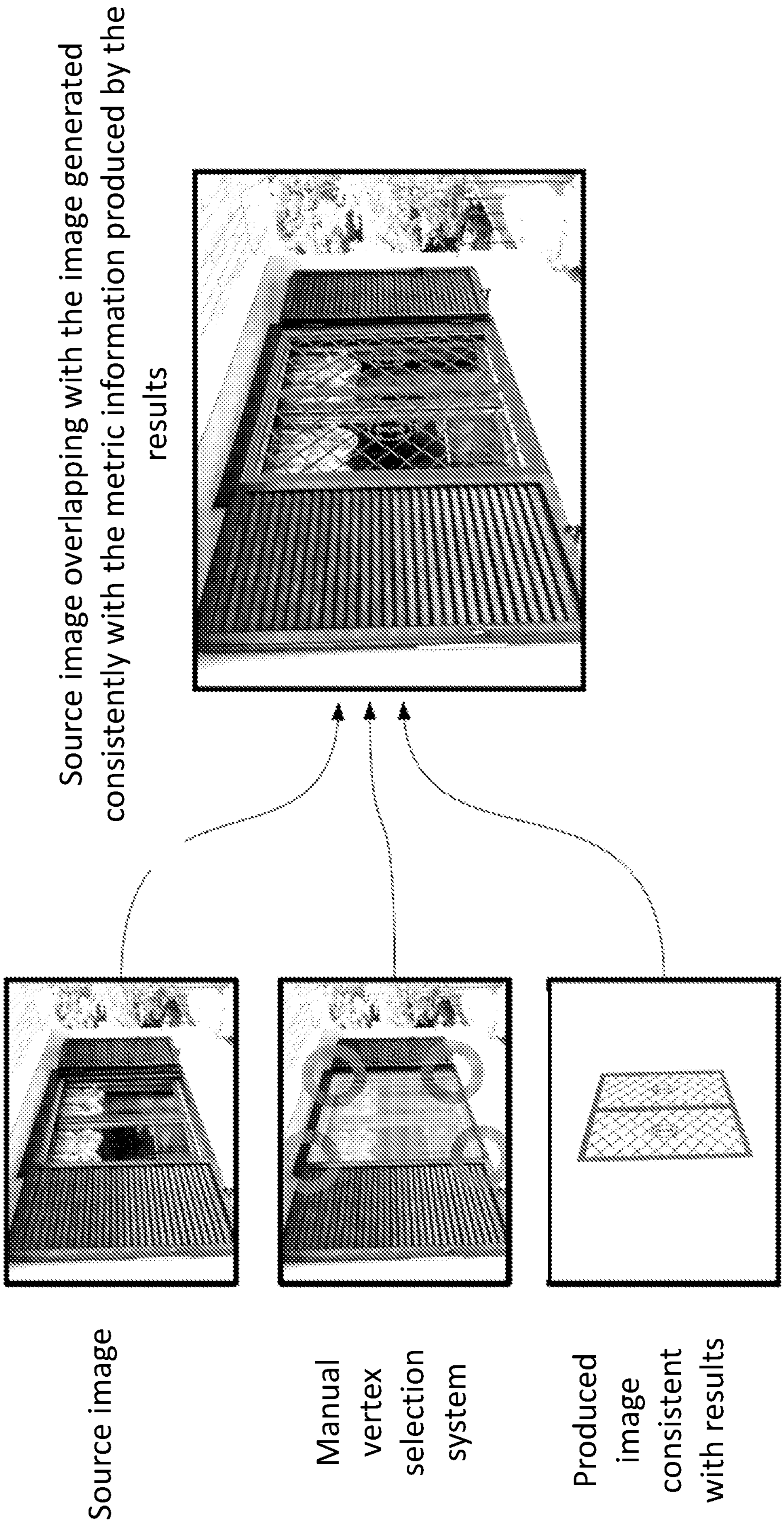
Source image overlapping with the image generated consistently with the metric information produced by the results
Source image
Manual vertex selection system
Produced image consistent with results

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 107369150 A
- US 5808623 A
- US 20130335575 A1
- EP 2662839 A


### Non-patent literature cited in the description


- **ANTONIO CRIMISINI.** *Accurate visual metrology from single and multiple uncalibrated images*